(19) Europäisches Patentamt

European Patent Office

Office européen des brevets

(11) **EP 1 726 912 A2**

(12) **DEMANDE DE BREVET EUROPEEN**

(43) Date de publication:
**29.11.2006 Bulletin 2006/48**

(51) Int Cl.:
*G01B 5/10* (2006.01)       *G01B 5/12* (2006.01)

(21) Numéro de dépôt: **06113016.7**

(22) Date de dépôt: **24.04.2006**

(84) Etats contractants désignés:
**AT BE BG CH CY CZ DE DK EE ES FI FR GB GR
HU IE IS IT LI LT LU LV MC NL PL PT RO SE SI
SK TR**
Etats d'extension désignés:
**AL BA HR MK YU**

(30) Priorité: **27.05.2005 FR 0505377**

(71) Demandeur: **Societe de Technologie Michelin
63000 Clermont-Ferrand (FR)**

(72) Inventeur: **ROUX, Claude
58300, DECIZE (FR)**

(74) Mandataire: **Dequire, Philippe Jean-Marie Denis
M.F.P. Michelin,
SGD/LG/PI-F35-Ladoux,
23, place des Carmes Déchaux
63040 Clermont-Ferrand Cedex 09 (FR)**

(54) **Procédé et dispositif de contrôle d'un appui de soutien de pneumatiques.**

(57)     Procédé et dispositif de contrôle d'un appui de soutien de pneumatiques, caractérisé en ce que l'on mesure au moins une grandeur représentative d'au moins une cote intérieure ou extérieure de l'appui représentative du diamètre intérieur efficace dudit appui et en ce qu'on effectue ladite mesure alors qu'au moins une partie de la surface radialement intérieure de l'appui est soumise à des efforts radiaux centrifuges, adaptés pour que ladite grandeur mesurée soit représentative dudit diamètre intérieur efficace.

**FIG. 1**

EP 1 726 912 A2

## Description

La présente invention concerne les appuis de soutien pour pneumatiques de véhicules que l'on monte à l'intérieur des pneumatiques, sur leurs jantes, pour supporter la charge en cas de défaillance du pneumatique. Plus particulièrement, elle concerne le contrôle des caractéristiques dimensionnelles des appuis après leur fabrication.

La fonction principale des appuis de soutien est de supporter la charge en cas de perte sévère de pression de gonflage du pneumatique. Lorsque les pneumatiques sont normalement gonflés, les appuis de soutien doivent nuire le moins possible aux propriétés dynamiques des pneumatiques. En particulier, ils doivent rester bien centrés autour de la jante pour éviter tout effet de balourd, et cela quelles que soient la température de l'appui et la vitesse de roulage du véhicule. Ils doivent aussi pouvoir être montés autour des jantes des roues des véhicules et démontés de façon aisée.

Ces deux exigences contradictoires imposent aux appuis de soutien de pneumatiques des tolérances de fabrication très contraignantes pour en particulier leur diamètre intérieur. Ce diamètre intérieur, appelé diamètre nominal de l'appui, doit être inférieur au diamètre de la jante de montage pour assurer cet effet de serrage, mais l'écart entre le diamètre de la jante et le diamètre nominal doit être faible pour permettre le montage et le démontage de l'appui sur la jante. En conséquence, si le diamètre intérieur de l'appui est légèrement supérieur à la cote fixée, l'appui risque de ne pas être suffisamment solidaire de la jante. Dans le cas contraire, diamètre très légèrement inférieur à la cote fixée, le montage en atelier ainsi que le démontage deviendront très difficiles, voire impossibles.

Ces exigences sont particulièrement notables dans le cas d'appuis de soutien qui comportent des renforts annulaires disposés dans leur base pour résister aux efforts de centrifugation. Un exemple de tels appuis est présenté dans la demande EP 0 796 747 A1. Ces appuis sont destinés à être montés sur une jante par enfilage sur la portée correspondante de la jante. On peut se référer au brevet US 5 836 366 qui décrit un procédé de montage d'un ensemble formé d'un pneumatique et d'un appui de soutien sur une jante de roue dont les deux sièges sont de diamètres différents.

Après avoir fabriqué de tels appuis de soutien de pneumatiques, il est nécessaire de contrôler leurs caractéristiques dimensionnelles, notamment leur diamètre intérieur. Mais, il n'existe pas de méthode permettant de le faire de façon représentative de leurs conditions ultérieures d'utilisation.

L'invention a pour objet un procédé de contrôle d'un appui de soutien de pneumatiques, caractérisé en ce que l'on mesure au moins une grandeur représentative d'au moins une cote intérieure ou extérieure de l'appui représentative du diamètre intérieur efficace de l'appui et en ce qu'on effectue la mesure alors qu'au moins une partie de la surface radialement intérieure de l'appui est soumise à des efforts radiaux centrifuges, adaptés pour que la grandeur mesurée soit représentative du diamètre intérieur efficace.

De façon préférentielle, on mesure une grandeur représentative du développé intérieur ou de la circonférence intérieure de l'appui.

La grandeur choisie, le développé intérieur ou circonférence intérieure de l'appui, correspond à une mesure de la circonférence de la surface radialement intérieure de l'appui mesurée lorsque cette surface est mise en extension par des efforts radiaux centrifuges. Cette mesure est représentative de l'enfilage sur une jante car l'appui se met en contact avec la jante quelle que soit son ovalisation. Cette mesure a l'avantage de donner des résultats beaucoup plus reproductibles que des mesures directes de diamètre intérieur de l'appui qui sont très perturbées par ces phénomènes d'ovalisation de l'appui après sa fabrication. Cela permet à cette mesure d'être compatible avec les tolérances très contraignantes de fabrication.

Plus précisément, le procédé selon l'invention comprend les étapes suivantes :

- on dispose l'appui autour d'un outil ; l'outil comportant au moins deux pièces mobiles radialement l'une par rapport à l'autre, chaque pièce possédant une surface radialement extérieure de forme adaptée pour épouser une portion circonférentielle de la surface radialement intérieure de l'appui ;
- on écarte radialement les pièces mobiles les unes des autres et on applique les surfaces radialement extérieures des pièces contre au moins une portion circonférentielle de la surface radialement intérieure de l'appui jusqu'à une condition d'extension de la surface radialement intérieur de l'appui donnée ; et
- on mesure la grandeur représentative du diamètre intérieur efficace de l'appui.

Selon un premier mode de réalisation préférentiel, on écarte radialement les pièces mobiles jusqu'à appliquer des efforts d'extension de la surface radialement intérieure de l'appui de valeurs données et on mesure le déplacement correspondant des pièces mobiles.

Selon un second mode de réalisation, on écarte les pièces mobiles d'une distance donnée et on mesure la résultante correspondante des efforts exercés par la surface radialement intérieure de l'appui sur au moins l'une des pièces.

Préférentiellement, on mesure la grandeur représentative du diamètre intérieur efficace de l'appui après un temps de stabilisation donné. Ce temps peut être compris entre 10 et 60 secondes.

De façon avantageuse, on applique la surface radialement extérieure des pièces contre une portion circonférentielle sensiblement lisse de la surface radialement intérieure de l'appui.

Comme le montre la demande WO 01/32450, les appuis de soutien comportent souvent sur leur surface intérieure des cales ou des nervures destinées à faciliter leur montage ainsi que le compromis entre les exigences contradictoires précédemment citées. Il est préférable de réaliser les mesures selon l'invention dans une partie de cette surface intérieure des appuis dépourvue de telles cales ou nervures pour améliorer la précision et la représentativité des mesures.

De préférence, la hauteur axiale de la surface radialement extérieure des pièces étant *d*, les efforts appliqués par millimètre de hauteur axiale pour mettre en extension la surface radialement intérieure de l'appui sont compris entre 40 et 150 N/mm.

Le niveau élevé de ces efforts permet de mettre en tension les renforts annulaires de l'appui et ainsi d'effectuer une mesure précise du diamètre efficace de l'appui de soutien dans des conditions représentatives de son montage et de son utilisation. Lorsque les efforts sont trop faibles, on constate que la dispersion des mesures augmente en raison des incertitudes géométriques liées notamment aux phénomènes de retrait thermique lors de la fabrication des appuis, qu'ils soient en caoutchouc, en polyuréthanne ou en matériau thermoplastique. A l'inverse des efforts trop élevés ne sont plus représentatifs des conditions de montage et de démontage des appuis.

Ces efforts peuvent avantageusement être compris entre 50 et 100 N/mm pour des appuis constitués principalement de matériau caoutchouteux.

L'invention a aussi pour objet un dispositif de contrôle d'un appui de soutien de pneumatiques, caractérisé en ce qu'il comporte :

- un support d'appui de soutien ;
- un outil de mise sous contrainte radiale vers l'extérieur d'au moins une partie de la surface radialement intérieure de l'appui comportant au moins deux pièces mobiles radialement l'une par rapport à l'autre de manière à mettre en extension la surface radialement intérieure de l'appui ;
- des moyens pour déplacer les pièces mobiles radialement intérieurement et extérieurement ; et
- des moyens de mesure des déplacements relatifs des pièces mobiles ainsi que des efforts subis par ces pièces.

Avantageusement, l'outil a une forme radialement extérieure sensiblement cylindrique de révolution adaptée pour être plaquée contre au moins une partie de la surface radialement intérieure de l'appui.

Le dispositif de contrôle selon l'invention peut être tel que, l'outil comportant au moins deux pièces mobiles l'une par rapport à l'autre, chaque pièce possède une forme radialement extérieure adaptée pour épouser au moins une portion circonférentielle de la surface radialement intérieure de l'appui.

Avantageusement, la surface radialement extérieure des pièces comporte un revêtement de surface de faible coefficient de frottement. Ce revêtement a l'avantage de mieux répartir les efforts transmis par les pièces à la surface intérieure de l'appui. Ce revêtement peut être un matériau plastique tel du TEFLON®.

De façon alternative, la surface radialement extérieure des pièces peut comporter une ou plusieurs roulettes. Les roulettes ont le même objectif que le revêtement de faible coefficient de frottement, mieux répartir les efforts transmis par les pièces à la surface intérieure de l'appui.

Il est aussi possible de prévoir des moyens pour lubrifier le contact entre les pièces et la surface radialement intérieure de l'appui.

De façon avantageuse, les pièces ont une géométrie adaptée pour avoir, dans leur position la plus proche les unes des autres, un diamètre extérieur inférieur au diamètre intérieur nominal de l'appui de soutien. Cela permet une mise en place très facile de l'appui autour de l'outil.

De façon préférentielle, l'outil comporte deux pièces. Les essais de la demanderesse ont en effet montré une reproductibilité des mesures satisfaisantes et cela à l'avantage de permettre d'utiliser un dispositif beaucoup plus simple que s'il avait été nécessaire d'avoir un outil avec 3, 4 ou 6 pièces mobiles radialement intérieurement et extérieurement.

Un mode de réalisation préférentiel de l'invention va maintenant être décrit à l'aide du dessin annexé dans lequel :

La Fig. 1 présente un schéma de principe en vue de côté et en coupe partielle d'un dispositif de contrôle selon l'invention ;

La Fig. 2 présente un schéma de principe en vue de dessus d'un outil de mesure d'un dispositif selon l'invention ;

La Fig. 3 présente l'outil de la figure 2 dans une position permettant la mise en place d'un appui ; et

La Fig. 4 présente l'outil de la figure 2 dans une position de mesure.

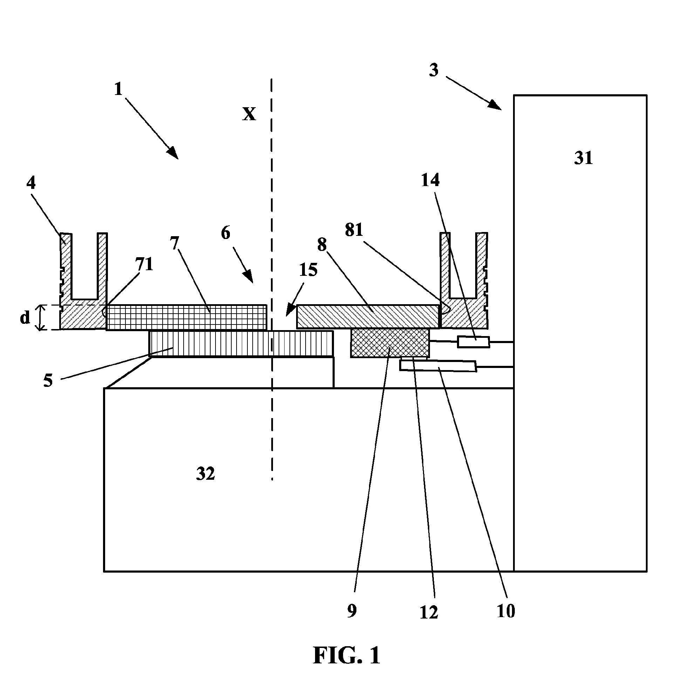

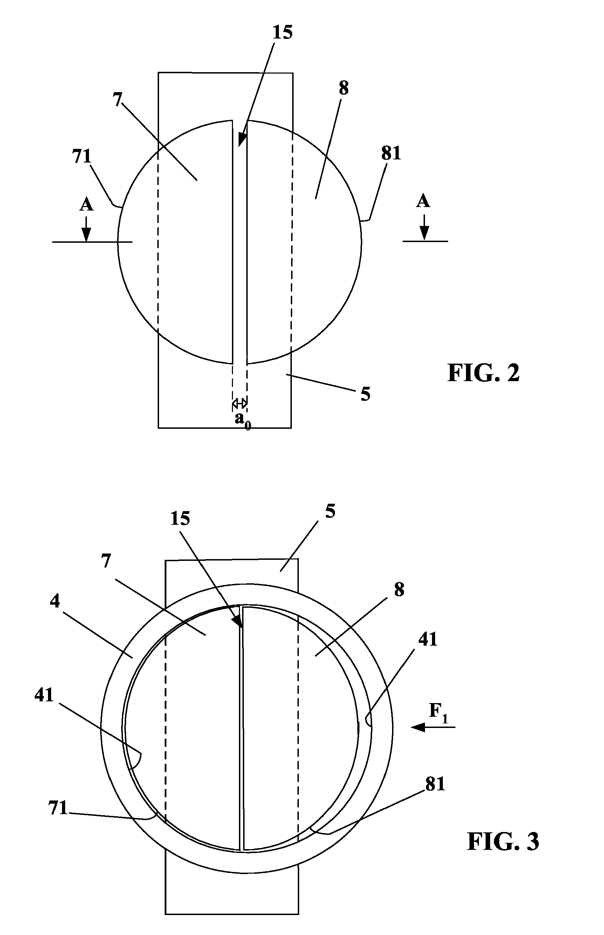

La figure 1 présente en vue de côté et en coupe partielle un dispositif de contrôle des appuis de soutien de pneumatiques selon l'invention. La coupe est selon AA tel qu'indiqué à la figure 2.

Ce dispositif 1 comprend principalement un bâti 3, un support 5 destiné à recevoir les appuis 4, un outil de mesure 6 comportant deux pièces 7 et 8, l'une mobile 8, l'autre fixe 7, des moyens de déplacement 10 de la pièce mobile 8 et des capteurs d'efforts 12 et de déplacement 14 reliés à la pièce mobile 8. Dans l'exemple représenté, l'outil de mesure 6 et l'appui 4 sont disposés dans un plan horizontal, donc avec l'axe de symétrie X de l'appui vertical.

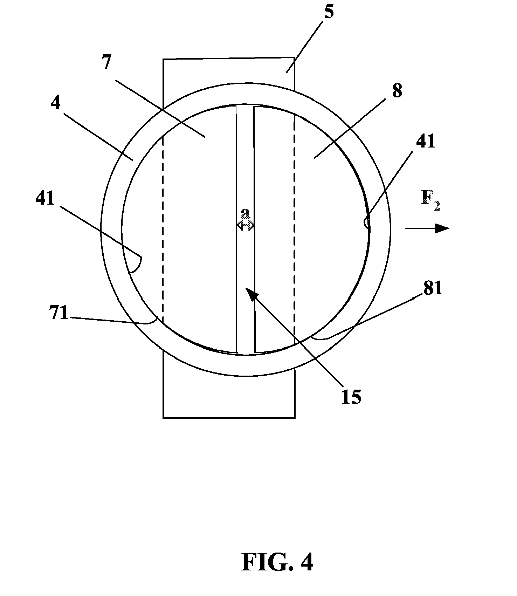

Le support 5 est rigidement fixé à la partie inférieure 32 du bâti 3. Comme le montrent les figures 3 et 4, ce support a pour fonction de tenir l'appui 4 lorsque celui-ci est disposé autour de l'outil de mesure 6.

L'outil de mesure 6 comprend deux pièces 7 et 8. La pièce 7 est rigidement liée au support 5 et est immobile. La pièce 8 est liée à la partie 31 du bâti 3 par l'intermédiaire d'un support 9 et de moyens de déplacement en translation 10 du support 9 et de la pièce 8. Ces moyens 10 peuvent être notamment une crémaillère, une platine de déplacement micrométrique ou un vérin. Un capteur de déplacement 14 destiné à mesurer les déplacements relatifs des pièces 7 et 8 est disposé entre le support 9 et le bâti 31. Un capteur de force 12 est aussi disposé entre les moyens de déplacement 10 et le support 9 pour suivre les efforts transmis par la pièce 8 à l'appui 4.

Comme on le voit sur les figures 2 à 4, les deux pièces 7 et 8 ont sensiblement une forme demi-circulaire. Le rayon de chaque pièce est égal à celui de la jante de montage de l'appui. Cela a pour but de permettre aux deux surfaces radialement extérieures 71 et 81 de ces deux pièces de bien épouser la surface radialement intérieure de l'appui 4 pendant les mesures. La pièce 8 est mobile en translation radialement intérieurement et extérieurement dans la direction de la flèche F de la figure 2. Les pièces 7 et 8 ont une hauteur axiale d inférieure à la hauteur axiale des appuis 4. Cela permet d'appliquer les efforts de mise en extension dans la partie de l'appui destinée à être disposée vers l'intérieur des véhicules. Cette partie ne comporte pas de nervures ou de cales destinées à faciliter le compromis entre montage et centrifugation des appuis. En conséquence les surfaces 41 et 71-81 peuvent venir en contact étroit ce qui améliore la précision de la mesure ainsi que sa représentativité. Un ordre de grandeur de la hauteur d est de 20 mm.

A la figure 2, les deux pièces 7 et 8 sont disposées l'une par rapport à l'autre de telle sorte que leurs surfaces extérieures 71 et 81 s'inscrivent dans un cercle de diamètre égal au diamètre de la jante de montage : $\Phi_J$. La distance $a_0$ sépare les deux pièces 7 et 8 dans cette position de référence. On voit qu'entre les deux pièces 7 et 8 subsiste une bande 15 libre. Cette bande 15 a pour but de permettre de rapprocher la pièce 8 de la pièce 7 lorsque l'on veut mettre en place l'appui 4 autour de l'outil 6. C'est ce qui est montré à la figure 3. Le déplacement de la pièce 8 dans la direction $F_1$ permet cette mise en place de l'appui sans difficulté.

Après la mise en place de la surface radialement intérieure 41 de l'appui 4 autour des surfaces 71 et 81 des pièces 7 et 8, on écarte progressivement la pièce mobile 8 de la pièce 7. Ce déplacement se fait radialement extérieurement. Il en résulte que les surfaces 41 et 71-81 viennent en contact étroit et la pièce 8 applique sur la surface 41 des efforts croissants. La résultante de ces efforts est mesurée par le capteur de force 12.

Comme on l'a vu, les efforts de mise en extension ne sont appliqués que sur une hauteur axiale limitée de la surface radialement intérieure des appuis. Lorsque ces efforts atteignent une valeur de l'ordre de 55 N/mm pour des appuis en matériau caoutchouteux de petite dimension ou de l'ordre de 80 N/mm pour des appuis en matériau caoutchouteux de plus grande dimension, on garde constant cet effort appliqué, on attend la stabilisation du déplacement pendant quelques secondes, de 10 à 60 et on mesure la valeur a de la distance entre les deux pièces 7 et 8.

On en déduit immédiatement le développé intérieur ou circonférence intérieure de l'appui :

$$P = \pi . \Phi_J + 2.(a - a_0) ,$$

et le diamètre efficace de l'appui :

$$\Phi_A = \Phi_J + 2\frac{a - a_0}{\pi}$$

avec : avec P, circonférence intérieure de l'appui, $\Phi_A$ le diamètre efficace de l'appui, a écartement des deux pièces 7 et 8 sous l'effort de mise en extension donné, $a_0$ écartement de référence des deux pièces 7 et 8 pour lequel leurs surfaces extérieures s'inscrivent dans un cercle de diamètre $\Phi_J$ correspondant au diamètre de la jante de montage de l'appui.

La pièce 8 est ensuite ramenée à sa position proche de la pièce 7 et l'appui dégagé du poste de mesure.

Des valeurs nominales et des tolérances adaptées sont fixées pour chaque appui en fonction de leurs caractéristiques et des besoins.

La figure 4 présente un autre mode de réalisation d'un outil de mesure selon l'invention.

Dans ce mode de réalisation présenté, l'outil ne comporte que deux pièces d'application des efforts à la surface intérieure des appuis, on pourrait aisément augmenter le nombre de ces pièces à 3, 4 ou 6. Cela permettrait d'appliquer un champ d'efforts centrifuges pour mettre en extension la surface intérieure des appuis plus uniforme. On pourrait aussi appliquer un revêtement de surface sur les surfaces radialement extérieures des pièces 7 et 8 pour diminuer leur coefficient de frottement ou lubrifier ce contact ou encore incorporer des roulettes.

Les modes de réalisation présentés ne l'ont été qu'à titre d'exemple et de nombreuses modifications peuvent être apportées par l'homme de l'art sans pour autant sortir du cadre de l'invention défmi par les revendications suivantes.

**Revendications**

1. Procédé de contrôle d'un appui de soutien de pneumatiques, **caractérisé en ce que** l'on mesure au moins une grandeur représentative d'au moins une cote intérieure ou extérieure de l'appui représentative du diamètre intérieur efficace dudit appui et **en ce qu'**on effectue ladite mesure alors qu'au moins une partie de la surface radialement intérieure de l'appui est soumise à des efforts radiaux centrifuges, adaptés pour que ladite grandeur mesurée soit représentative dudit diamètre intérieur efficace.

2. Procédé de contrôle selon la revendication 1, dans lequel on mesure une grandeur représentative du développé intérieur ou de la circonférence intérieure dudit appui.

3. Procédé de contrôle selon l'une des revendications 1 et 2, dans lequel :

   - on dispose ledit appui autour d'un outil ; ledit outil comportant au moins deux pièces mobiles radialement l'une par rapport à l'autre, chaque pièce possédant une surface radialement extérieure de forme adaptée pour épouser une portion circonférentielle de la surface radialement intérieure dudit appui ;
   - on écarte radialement lesdites pièces mobiles les unes des autres et on applique lesdites surfaces radialement extérieures desdites pièces contre au moins une portion circonférentielle de la surface radialement intérieure dudit appui jusqu'à une condition d'extension donnée de ladite surface radialement intérieure dudit appui ; et
   - on mesure ladite grandeur représentative du diamètre intérieur efficace dudit appui.

4. Procédé de contrôle selon la revendication 3, dans lequel on écarte lesdites pièces mobiles jusqu'à appliquer des efforts d'extension de ladite surface radialement intérieure dudit appui de valeurs données et on mesure le déplacement correspondant desdites pièces mobiles.

5. Procédé de contrôle selon la revendication 3, dans lequel on écarte lesdites pièces mobiles d'une distance donnée et on mesure la résultante correspondante des efforts exercés par la surface radialement intérieure dudit appui sur au moins l'une desdites pièces.

6. Procédé de contrôle selon l'une des revendications 4 et 5, dans lequel on mesure ladite grandeur représentative du diamètre intérieur efficace dudit appui après un temps de stabilisation donné.

7. Procédé de contrôle selon l'une des revendications 1 à 6, dans lequel on applique la surface radialement extérieure desdites pièces contre une portion circonférentielle sensiblement lisse de la surface radialement intérieure dudit appui.

8. Procédé de contrôle selon l'une des revendications 1 à 7, dans lequel, la hauteur axiale de la surface radialement extérieure des pièces étant *d,* les efforts appliqués par millimètre de hauteur axiale pour mettre en extension la surface radialement intérieure de l'appui sont compris entre 40 et 150 N/mm.

9. Procédé de contrôle selon la revendication 8, dans lequel les efforts appliqués pour mettre en extension la surface radialement intérieure de l'appui sont compris entre 50 et 100 N/mm.

10. Dispositif de contrôle d'un appui de soutien de pneumatiques, **caractérisé en ce qu'**il comporte :

    - un support d'appui de soutien ;
    - un outil de mise sous contrainte radiale vers l'extérieur d'au moins une partie de la surface radialement intérieure dudit appui comportant au moins deux pièces mobiles radialement l'une par rapport à l'autre de manière à mettre en extension ladite surface radialement intérieure ;
    - des moyens pour déplacer lesdites pièces mobiles radialement intérieurement et extérieurement ; et
    - des moyens de mesure des déplacements relatifs desdites pièces mobiles ainsi que des efforts subis par lesdites pièces.

11. Dispositif de contrôle selon la revendication 10, dans lequel ledit outil a une surface radialement extérieure de forme sensiblement cylindrique de révolution adaptée pour être plaquée contre au moins une partie de la surface radialement intérieure dudit appui.

12. Dispositif de contrôle selon la revendication 11, dans lequel ledit outil comportant au moins deux pièces mobiles l'une par rapport à l'autre, chaque pièce possède une surface radialement extérieure de forme adaptée pour épouser au moins une portion circonférentielle de la surface radialement intérieure dudit appui.

13. Dispositif de contrôle selon la revendication 12, dans lequel la surface radialement extérieure desdites pièces comporte un revêtement de surface de faible coefficient de frottement.

14. Dispositif de contrôle selon la revendication 12, dans lequel la surface radialement extérieure desdites pièces comporte au moins une roulette.

15. Dispositif de contrôle selon la revendication 12, comportant des moyens pour lubrifier le contact entre les pièces et la surface radialement intérieure de l'appui.

16. Dispositif de contrôle selon l'une des revendications 10 à 15, dans lequel lesdites pièces ont une géométrie adaptée pour avoir, dans leur position la plus proche les unes des autres, un diamètre extérieur inférieur au diamètre intérieur nominal de l'appui de soutien.

**17.** Dispositif de contrôle selon l'une des revendications 10 à 16, dans lequel ledit outil comporte deux pièces.

**FIG. 1**

15

7

71

A

8

81

A

5

$a_0$

**FIG. 2**

15

5

7

4

8

41

41

$F_1$

71

81

**FIG. 3**

FIG. 4

**EP 1 726 912 A2**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0796747 A1
- US 5836366 A
- WO 0132450 A